**Europäisches Patentamt**

**European Patent Office**

**Office européen des brevets**

(19)

(11) Publication number : **0 417 324 B1**

(12)

# EUROPEAN PATENT SPECIFICATION

(45) Date of publication of patent specification :
14.12.94 Bulletin 94/50

(51) Int. Cl.⁵ : **H01M 12/06**

(21) Application number : **90905642.6**

(22) Date of filing : **31.03.90**

(86) International application number :
**PCT/JP90/00445**

(87) International publication number :
**WO 90/12428 18.10.90 Gazette 90/24**

(54) **AIR CELL.**

(30) Priority : **04.04.89 JP 85391/89**
**04.04.89 JP 85392/89**
**04.04.89 JP 85393/89**

(43) Date of publication of application :
**20.03.91 Bulletin 91/12**

(45) Publication of the grant of the patent :
**14.12.94 Bulletin 94/50**

(84) Designated Contracting States :
**AT DE FR GB IT NL**

(56) References cited :
**EP-A- 0 227 289**
**DE-A- 1 912 382**
**FR-A- 770 930**
**JP-A-60 131 773**
**JP-A-60 207 263**
**JP-B- 4 739 056**
**JP-B- 4 829 256**
**JP-U- 496 419**
**JP-U- 4 961 625**
**JP-U- 5 133 723**
**JP-U-51 102 721**
**JP-Y- 176 900**
**JP-Y- 3 931 895**
**US-A- 3 378 406**
**US-A- 3 623 914**

(73) Proprietor : **KOA OIL COMPANY, LIMITED**
**6-2, Ohte-Machi 2-Chome**
**Chiyoda-Ku Tokyo-To (JP)**

(72) Inventor : **OKAMURA, Okiyoshi Koa Oil Co.**
**Ltd. Marifu Seiyujo**
**1-1, Waki 6-chome**
**Waki-cho**
**Kuga-gun**
**Yamaguchi 740 (JP)**
Inventor : **NAKAURA, Kazuaki Koa Oil Co. Ltd.**
**Marifu Seiyujo**
**1-1, Waki 6-chome**
**Waki-cho**
**Kuga-gun**
**Yamaguchi 740 (JP)**
Inventor : **TAMANOI, Yoshihito Koa Oil Co. Ltd.**
**Marifu Seiyujo**
**1-1, Waki 6-chome**
**Waki-cho**
**Kuga-gun**
**Yamaguchi 740 (JP)**

(74) Representative : **Boon, Graham Anthony et al**
**Elkington and Fife**
**Prospect House**
**8 Pembroke Road**
**Sevenoaks, Kent TN13 1XR (GB)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 417 324 B1

## Description

The present invention relates to an air cell, particularly to an all-surface open type air cell which is light in weight and excellent in electric power property.

Conventional air cells are constituted basically from a cathode, an anode and an electrolyte, and the containers of the cells are sealed to avoid the effluence of the electrolyte from the air cells.

For such conventional air cells, a firm sealed container is used, so that the weight of the container occupies a considerable proportion of the total weight of the air cell and thus causes the problem of the increase of its total weight. Further, conventional air cells are designed on the assumption that it works normally only when it is mounted in such a configuration that the electrolyte collects downward. Accordingly, if the air cell is laid or is used in an inclined situation, the electrolyte will not be supplied properly to the cathode or the anode, and thus the problem of disturbing the generation of electric power may be caused.

An object of the present invention is to provide an open type air cell in which the electrolyte filled will not be effluent from the cell in any situations of its use and which has a light weight and an excellent electric power property.

Accordingly, the invention provides an air cell comprising:

a casing;

a plurality of single cells which are disposed in said casing, each of said single cells having a cathode, an anode and a separator interposed between and integrating said cathode and said anode; and

an electrolyte compartment which is provided at the bottom of said casing, and a water-absorbing material being capable of absorbing and retaining an electrolyte located in said electrolyte compartment;

characterised in that

the air cell is substantially open on all surfaces, having a plurality of windows though the casing for air ventilation;

a spacer is interposed between adjacent ones of said plurality of single cells, said spacer comprising a plate having uneven front and back surfaces; and

an opening of said electrolyte compartment being open to the outer atmosphere through said windows of said casing, said separator being in contact with said water absorbing material occupying said electrolyte compartment.

The electrolyte in the electrolyte compartment is best supplied to the separator by capillary action. Furthermore, both the electrolyte and the separator should comprise absorbing materials, so that the electrolyte charged is retained within the absorbing materials and the escape of the electrolyte from the cell can be prevented.

Fig. 1 is a perspective of an embodiment of the present invention;

Fig. 2 is a perspective which illustrates the case 10 in the embodiment;

Fig. 3 is a diagrammatic view which illustrates the structure of the single cell 30 in the embodiment;

Fig. 4 is a perspective which illustrates the spacer 40 in the embodiment;

Fig. 5A is a longitudinal sectional view taken along the line V-V of Fig. 4 and Fig. 5B is a plan view of Fig. 4;

Fig. 6A is a transverse sectional view taken along the line VI-VI of Fig. 4 and Fig. 6B is a right side view of Fig. 4;

Fig. 7 is a diagrammatic view of another embodiment of the present invention in which the single cells illustrated in Fig. 1 are connected in series and two baths are provided for receiving an electrolyte;

Fig. 8 is a perspective which illustrates only a lower part of the case 10 in the embodiments illustrated in Figs. 1 and 7;

Fig. 9 is a diagrammatic view of a further embodiment of the present invention in which the single cells illustrated in Fig. 1 are connected in series and four baths are independently provided for receiving an electrolyte;

Fig. 10 is a diagrammatic view of an electrolyte which is shared by plural of cells connected in series; and

Fig. 11 is a graph which shows the variation of an output voltage in the case of keeping a load current at 1A.

According to the present invention, an electrolyte bath which has charged a water absorbing material for absorbing and retaining the electrolyte (electrolytic solution) of an air cell is provided in a cell, the effluence of the electrolyte from the air cell is prevented without necessity of sealing the cell. The air cell can be therefore made an open type cell which is excellent in air permeability, and the total weight of the air cell can be reduced. Accordingly, there is provided an open type air cell which can avoid the effluence of an electrolyte charged in the cell in any situations of use and has a light weight and an excellent electric power property.

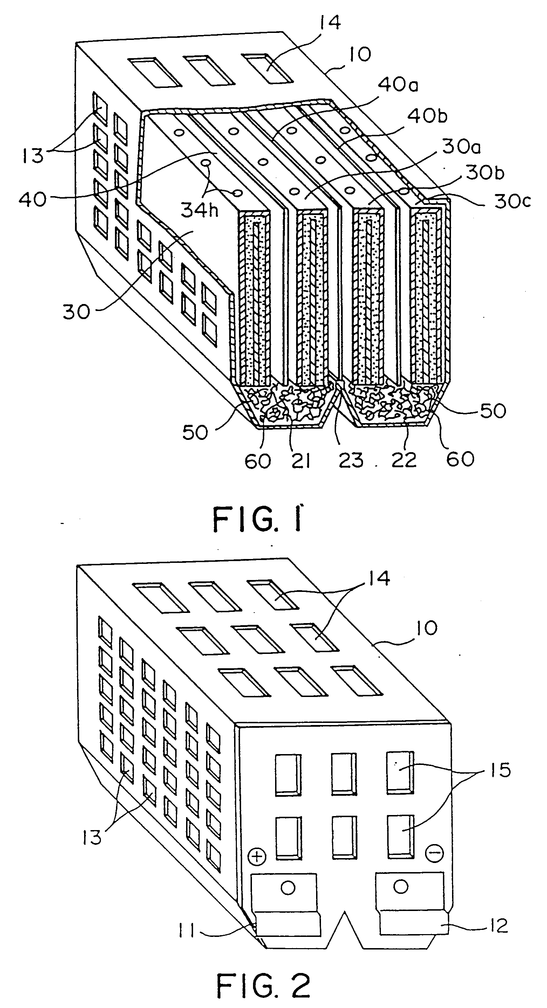

Fig. 1 is a perspective of an embodiment of the present invention.

In this embodiment, single cells 30, 30a, 30b and 30c, spacers 40, 40a and 40b, and a water absorbing material 50 are disposed in the case 10 of the air cell, and an electrolyte 60 is absorbed and retained in the water absorbing material 50.

Fig. 2 is a perspective which illustrates the case 10 in the aforementioned embodiment. On the front of the case 10 and the top and right sides thereof are provided windows for ventilation 13, 14 and 15, from which windows air is introduced into the case and supplied to the single cells 30, 30a, 30b and 30c. Windows are also provided on the rear and left sides of the case 10. A plus terminal 11 and a minus terminal 12 are disposed on the right side of the case 10. As described above, the air cell of the present invention has a cell case which is of an open type in substantially all surfaces.

In the preferred embodiment of the present invention illustrated in Fig. 1, there are provided a partition 23, the baths 21 and 22 partitioned by the partition 23, a water absorbing material 50 disposed in compartments, henceforth termed "baths", 21 and 22, and an electrolyte 60 which has been absorbed in the absorbing material 50 at the lower part of the case 10. As the absorbing material, a material which can absorb and retain an electrolyte can be used. Specifically, pulps, synthetic fibers, natural fibers and the like can be used.

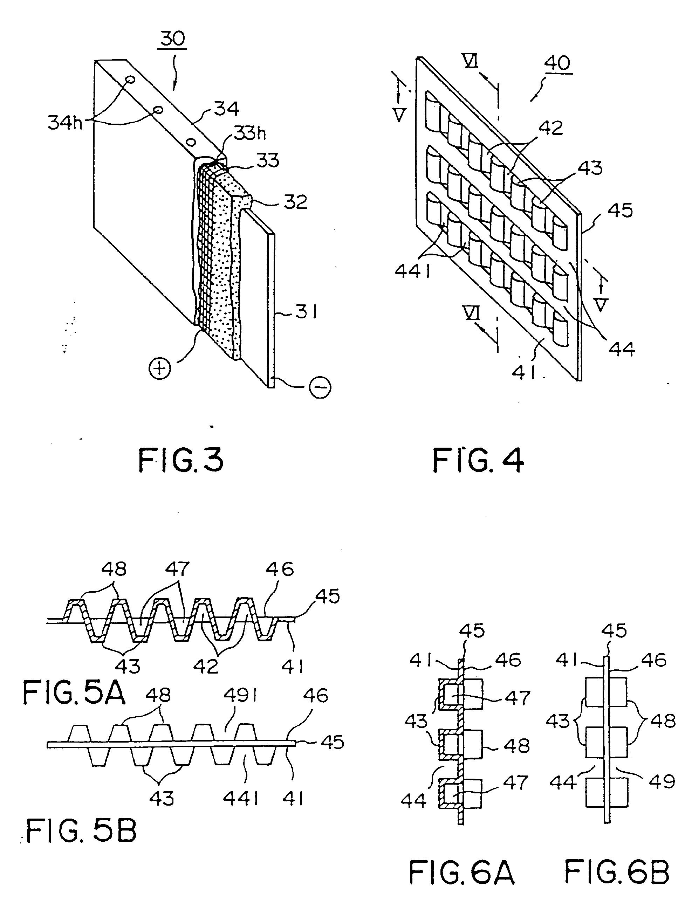

Fig. 3 is a diagrammatic view which illustrates the structure of the single cell 30 in the above described embodiment. In this connection, the single cell 30 comprises an anode 31, a separator 32, a current collector 33 and a cathode 34.

The anode 31 can be constructed of a magnesium alloy, a zinc alloy or an aluminium alloy. The anode 31 may be constructed of any one of these alloys or a plurality of the alloys. A lead wire is connected to the terminal of the anode 31 by soldering or with the aid of other means, and the lead wire is further connected to the - (minus) terminal 12.

The separator 32 comprises a water absorbing material such as a glass paper which has not been treated with a water-repellent for electrically insulating a current collector 33 and the anode 31 from each other and absorbing the electrolyte comprising a KCl solution or a NaCl solution from the electrolyte baths by a capillary phenomenon thus wetting the anode 31 and the cathode 34. In this connection, as the material of separator 32, there may be also used water-absorbing materials such as glass fibers or sheet papers or the like instead of the glass paper.

The present invention is characterized in that the separator 32 and the water absorbing material 50 in the electrolyte bath 21 shown in Fig. 1 are contacted at least partly with each other, so that the retention and prevention from effluence of the electrolyte can be realized and the electrolyte can be supplied to the separator efficiently.

The current collector 33 is in the form of a wire net or a mesh which is fabricated with a metal such as nickel, copper or the like and has a size of 340-330 mesh, so that the air may pass through the current collector 33. It is disposed between the anode 31 and the cathode 34 and is in close contact with the cathode 34. To the current collector 33 is connected a lead wire by soldering or with the aid of other means, and the lead wire is further connected to the + (plus) terminal 11.

The cathode 34 can be constructed of a film comprising as a main component a petroleum graphite powder, which film is porous and in close contact with the current collector 33. The cathode 34 can be fabricated by mixing the petroleum graphite powder with active carbon, adding a polytetrafluoroethylene dispersion to the mixture, stirring the resulting mixture, which is then coated on the current collector 33 in the form of a thin film, and heating the film. When the cathode 34 is intended to make close contact with the current collector 33 in the form of a film, it can be also contacted closely by electrostatic deposition or other methods.

When the single cell 30 is fabricated, a lead wire is connected to the terminal of the plate anode 31 by soldering and the lead wire is also connected to the terminal the current collector 33. The separator 32 in the form of a plate is then folded over, and the anode 31 is inserted between the folded halves. The cathode 34 which is in close contact with the current collector 33 and comprises a film having as a main component a petroleum graphite powder is folded over, and the separator 32 which has inserted the anode 31 between the folded halves is inserted into the folded cathode 34.

Symbols 33h and 34h indicate perforations for dispersing gases.

The structure and producing method of the single cells 30a, 30b and 30c are similar to those of the single cell 30.

Next, the spacer used in the present invention is described with reference to Figs. 4-6.

Fig. 4 is a perspective which illustrates a spacer 40 disposed between the single cells in the aforementioned embodiment (Fig. 1).

Fig. 5A is a longitudinal sectional view taken along the line V-V of Fig. 4, and Fig. 5B is a plan view of Fig. 4.

Fig. 6A is a transverse sectional view taken along the line VI-VI of Fig. 4, and Fig. 6B is a right side view of Fig. 4.

In general, when an air cell is constructed of a combination of a plurality of single cells, a sufficient amount of air must be supplied to respective single cells. Therefore, a certain spacing must be kept between two adjacent single cells. A spacer is provided for maintaining the spacing. The reason for providing such a spacing is to improve the air flow supply and thus to increase the output power of the cell. The spacer therefore must ensure an appropriate air permeation. During the practical use of the air cell, the spacer must have a certain strength in order to maintain the above described predetermined spacing between the cells. Furthermore, the air cell is conveniently light in weight. Foamed materials are impractical because of their poor resistance against electrolytes in spite of their advantage of light weight. Thus, it is proposed to make a spacer by forming a material having a superior resistance to chemicals to that of the foamed material into a predetermined thickness and providing plural perforations (such as slits or the like). However, a reinforced air cell in such manner leads to the increase of its weight and is economically expensive in order to maintain a sufficient strength as well as a certain extent of air permeation.

In consideration of the above mentioned situations, the present invention uses a spacer which comprises a plate having provided unevenness on both the face and the back. The spacer is specifically described below.

The spacer 40 comprises plastics such as polypropylene or the like as a material in the form of a plate 45 of which both faces have unevenness ((convex and concavity) and which has an insulating property. The spacer 40 has provided concave 42, convex 43 and the pathways of air 44 and 441 on the face side 41, and concave 47, convex 48 and the pathways of air 49 and 491 on the back side 46. The spacer 40 is formed by vacuum molding and has a slightly corrugated form due to the above described unevenness. The concave 42 on the face side 41 correspond to the convex 48 on the back side, and the convex 43 on the face side 41 correspond to the concave 47 on the back side.

While the unevenness of the spacer 40 is illustrated in the form of circular arcs in Fig. 4, the corresponding corrugations in Figs. 5 and 6 are illustrated in the form of trapezoids for the convenience of the description. Thus, the concave 42 and 47 and the convex 43 and 48 may be in the form of circular arcs, trapezoids or other forms such as triangle. However, in consideration of the spacer 40 which is disposed between the single cells 30 and 30a and thrusts the both single cells 30 and 30a for maintaining the spacing between the single cell 30 and 30a at a predetermined distance, the above mentioned unevenness is preferably a face but not a point or a line. The spacer 40 which has been formed by the methods other than vacuum molding may be also used. When the spacer 40 is disposed between the two cells which is connected in parallel to each other, the spacer 40 is not required to have the insulating properties. The structure and producing method of the spacers 40a and 40b are similar to those of the spacer 40.

As described above, the spacer according to the present invention comprises a plate which has provided unevenness on both the face and back, so that it has a sufficient air permeation as a spacer for air cells and ensures that a sufficient strength is kept for practical uses. The spacer also has an advantage in cost for the production of it.

Next, the action of the air cell according to the present invention is described with reference to the above described embodiments.

In general, when the air cell is not in use, the anode 31 and the cathode 34 are not contacted with the electrolyte 60 comprising KCl or the like, that is, the electrolyte 60 is not supplied to the water absorbing material 50, and they are supplied appropriately for the first time when the air cell is used. In such a manner, the power will not be decreased due to the natural discharge prior to the use of the cell, so that the shelf stability of the cell is improved extensively and the usefulness as the electric source in an emergency is increased.

When electromotive force is required, the electrolyte 60 is supplied from the windows 13, 14 and 15 of the case 10 in a predetermined amount. Thus, the following reactions take place at the cathode 34:

$$1/2O_2 + H_2O + 2e^- \rightarrow 2OH^-$$

or

$$O_2 + H_2O + 2e^- \rightarrow O_2H^- + OH^-$$
$$O_2H^- \rightarrow OH^- + 1/2O_2$$

On the other hand, when the anode 31 is made of a Mg alloy, the following reactions occur:

$$Mg + 2OH^- \rightarrow MgO + H_2O + 2e^-$$
$$Mg + 2H_2O \rightarrow Mg(OH)_2 + H_2\uparrow \text{ (side reaction)}$$

The above-described reactions are similar to those of the conventional cells. When a load is connected to the air cell, the electron $e^-$ produced in the anode 31 flows through the load and reaches the cathode 34 at which the electron $e^-$ vanishes as described above. In this way, the current flows from the cathode to anode 31 through the load.

In the above described embodiment, a spacer 40 is inserted into the single cells 30 and 30a and keeps the spacing between the single cells at a predetermined distance, so that air introduced from the outside of the case 10 is supplied in a sufficiently amount through the pathways 44, 441, 49 and 491 provided in the spacer 40 and the above described reactions in the cathode 34 proceed sufficiently. The cathode 34, the current collector 33 and the separator 32 have good air permeation, so that the air passed through the above described pathways 44, 441, 49 and 491 is also supplied to the anode 31 in a sufficient amount and thus the above-described reactions in the anode 31 occur satisfactorily.

The pathways of air in the spacer 40 are provided in the transverse and longitudinal directions in Fig. 4. While the air pathway 44 in the transverse direction on the face side 41 is easily recognized from Fig. 4, the air pathway 441 in the longitudinal direction is formed along the line between the flat portion of the face side 41 and the concave 42. The air pathway 49 in the transverse direction on the back side 46 is similar to the air pathway 44, and the air pathway in the longitudinal direction 491 is formed along the line between the flat portion of the back side 46 and the concave 47.

As the spacer 40 comprises plastics or the like, it is light in weight and inexpensive and the satisfactory strength can be obtained by the presence of the unevenness 42, 43, 47 and 48.

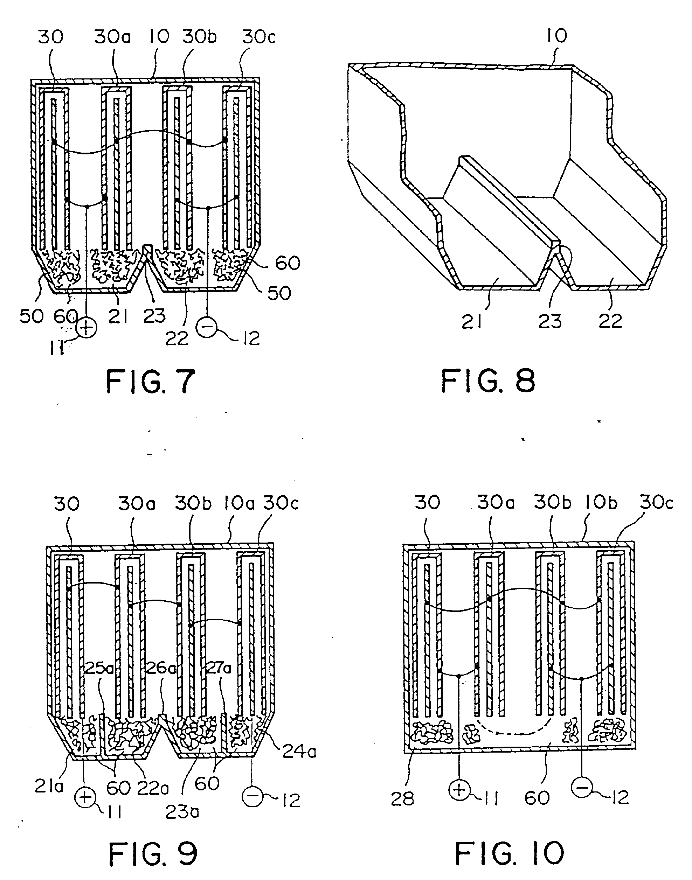

Fig. 7 is a diagrammatic view of another embodiment of the present invention, which illustrates an example in which respective single cells in the embodiment shown in Fig. 1 are connected in series-parallel and two baths for receiving an electrolyte are provided.

In Fig. 7, the spacers 40, 40a and 40b are omitted for the convenience of description. Fig. 8 is a perspective view which shows only the lower part of the case 10 in the embodiment illustrated in Figs. 1 and 7.

In the embodiment shown in Fig. 7, a water absorbing material 50 is stored in the bath 21, and an electrolyte 60 is absorbed and retained in the water absorbing material 50. The single cells 30 and 30a are disposed on the water absorbing material 50, and these single cells 30 and 30a are connected in parallel to each other. A water absorbing material 50 is stored in the bath 22, and the electrolyte 60 is absorbed in the water absorbing material 50. The single cells 30b and 30c are disposed on the water absorbing material 50, and these single cells are connected in parallel to each other. Thus, the above described single cells connected in parallel are further connected in series to each other.

In this connection, while the electrolyte 60 is filled in the baths 21 and 22, respectively, the electrolytes in the baths 21 and 22 should not be contacted with each other beyond the partition 23. In other words, the electrolyte 60 should not be supplied in such an amount that it will flow out over the partition 23.

In this way, it is possible to prevent the current between the single cells in the case 10 through the electrolyte 60, i.e., the leaking of the current (short-circuit of the current) in the case 10. In other words, as shown in Fig. 10, when an electrolyte 60 supplied in a bath 28 is shared by a plurality of single cells, which are connected in series with each other, a leakage current flows as shown in a dotted line in Fig. 10. On the other hand, in the case of Fig. 7, electrolytes supplied to each of the single cells which are connected in series to each other are individually received in a different baths, so that the current does not flow through the electrolyte and such a leakage current as occurred above does not take place.

Fig. 9 is a diagrammatic view of another embodiment of the present invention, which illustrates an example in which all the single cells shown in the embodiment of Fig. 1 are connected in series to each other and four baths for receiving the electrolyte are provided individually.

In this connection, the spacers 40, 40a and 40b are omitted in Fig. 9 for the convenience of description. In this embodiment, the baths 21a, 22a, 23a and 24a are provided and the partitions 25a, 26a and 27a for dividing these baths are provided. The single cells 30, 30a, 30b and 30c are disposed on the baths 21a, 22a, 23a and 24a, respectively.

The aforementioned leakage current is prevented by forming the individual baths corresponding to the number of the single cells to be connected in series (or the number of sets of single cells to be connected in series). It is needless to say that the number of the baths may be other than 2 or 4.

Furthermore, if the supplied amount of the electrolyte 60 is limited to ensure that it will not flow out over the partitions 25a, 26a or 27a, the aforementioned leakage current is prevented (even if a water absorbing material is not stored in the bath) and the electric power can be taken out efficiently.

On the other hand, in Figs. 1, 7 and 9, the water absorbing material 50 is stored in the respective baths, and the electrolyte 60 is absorbed and retained in the water absorbing material 50. In this way, the electrolyte 60 in the water absorbing material 50 is absorbed in the separator 32 of the single cell 30, and it is aspirated to a higher part of the separator 32 by a capillary phenomenon and is finally supplied to the all-surface of the cathode 34 and the anode 31.

Even if the case 10 falls down by accident, the electrolyte 60 is prevented from the scattering to the other parts or the effluence due to the water-holding capacity of the water absorbing material 50. Accordingly, problems can be avoided even if the case 10 is laid or used in an inclined situation. According to the present invention, the water absorbing material 50 retains the electrolyte 60 even if the case 10 falls down, and the electrolyte 60 can be supplied continuously to the cathode 34 and the anode 31 through the separator 32. Therefore, the generation of electric power will not cease even if the air cell falls down violently.

In this way, according to the present invention, the sealed structure of the case 10 is not required, so that the undesirable increase of the total weight of the air cell due to the sealed structure is also eliminated. In other words, the air cell of the present invention is substantially of all-surface open type and thus excellent in air permeation and also has an advantage in that the function of the air cell can be improved.

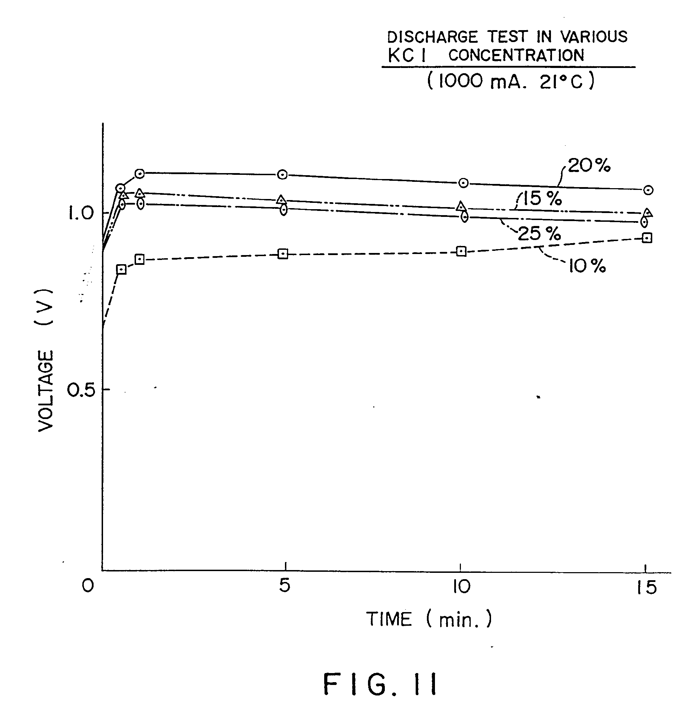

Fig. 11 is a graph which demonstrates the variation of the output voltage on maintaining the load current at 1 A in the embodiment above.

In this case, the anode 31 is made of a magnesium alloy and, as is apparent from the graph, has a high output voltage when the electrolyte 60 has a KCl concentration in the range from 15% by weight to 25% by weight.

In the above-mentioned embodiment, while the KCl solution was used as the electrolyte 60, other electrolytes such as sea water or other brines may also be used.

In this connection, aforementioned embodiments has been described with reference to the cases of using a petroleum graphite powder as an anode, and other graphite materials other than the petroleum graphite powder may be used as an anode.

INDUSTRIAL APPLICABILITY

The air cell of the present invention is substantially open type and has the effects that the scattering of the electrolyte to the outside of the air cell is successfully avoided, and that the total weight of the air cell can be reduced and electric power can be generated even if the air cell is completely fallen down.

Therefore, the air cell of the present invention is a cell which is compact in size, light in weight and of a high power, and thus it can be widely used for various applications such as an electric source in an emergency when the power of a battery for an automobile is lowered, a power source for a model airplane, or an electric source for leisure time amusements, e.g., camping, fishing or the like.

**Claims**

1. An air cell comprising:
   a casing (10);
   a plurality of single cells (30) which are disposed in said casing (10), each of said single cells having a cathode (34), an anode (31) and a separator (32) interposed between and integrating said cathode (34) and said anode (31); and
   an electrolyte compartment (21) which is provided at the bottom of said casing (10), and a water-absorbing material (50) being capable of absorbing and retaining an electrolyte located in said electrolyte compartment (21);
   characterised in that
   the air cell is substantially open on all surfaces, having a plurality of windows (13, 14, 15) though the casing (10) for air ventilation;
   a spacer (40) is interposed between adjacent ones of said plurality of single cells, said spacer (40) comprising a plate having uneven front and back surfaces; and
   an opening of said electrolyte compartment (21) being open to the outer atmosphere through said windows (13, 14, 15) of said casing (10), said separator (32) being in contact with said water absorbing material (50) occupying said electrolyte compartment (21).

2. An air cell according to claim 1, wherein a current collector (33) is provided between said anode (31) and said separator (32).

3. An air cell according to claim 1 or 2, wherein said electrolyte compartment (21) has a partition (23, 25a, 26a, 27a).

4. An air cell according to claim 3, wherein said electrolyte compartment is divided into a plurality of compartments (21a, 22a, 23a, 24a) which are arranged so that a single cell corresponds to one of the divided compartments, and single cells each of which has a supply of an electrolyte from a different compartment are connected in series to each other.

5. An air cell according to claim 3, wherein said electrolyte compartment is divided into a plurality of compartments (21, 22), which are arranged so that two or more single cells correspond to one of the divided compartments and single cells which have a supply of an electrolyte from a common compartment are connected in parallel to each other.

6. An air cell according to claim 3, wherein said electrolyte compartment is divided into a plurality of compartments (21a, 22a, 23a, 24a), single cells each of which has a supply of an electrolyte from a different compartment are connected in series to each other, and single cells which have a supply of an electrolyte from a common compartment are connected in parallel to each other.

7. An air cell according to any preceding claim, wherein a convex surface on one face of the spacer (40) has a corresponding concave surface on the opposite face.

8. An air cell according to claim 1, wherein water absorbing materials in the respective partitioned electrolyte compartments (21) are not in a state of contact to each other.

9. An air cell according to claim 1, wherein said water absorbing material (50) and/or separator (22) comprise one or a mixture of two or more selected from the group consisting of pulps, synthetic fibers, natural fibers, asbestos and glass papers.

**Patentansprüche**

1. Eine Luftzelle, die aufweist:
   ein Gehäuse (10);
   eine Vielzahl von einzelnen Zellen (30), die in dem Gehäuse (10) angeordnet sind, wobei jede der einzelnen Zellen eine Kathode (34), eine Anode (31) und eine Trenneinrichtung (32) aufweist, die zwischen der Kathode (34) und der Anode (31) angeordnet ist und diese miteinander vereint; und
   einen Elektrolytabschnitt (21), der am Boden des Gehäuses (10) vorgesehen ist, und ein wasserabsorbierendes Material (50), das in der Lage ist, einen in dem Elektrolytabschnitt (21) vorhandenen Elektrolyten zu absorbieren und aufzunehmen;

**dadurch gekennzeichnet,** daß

die Luftzelle im wesentlichen an allen Oberflächen offen ist, die eine Vielzahl von Fenstern (13, 14, 15) durch das Gehäuse (10) zur Luftventilation haben;

ein Abstandshalter (40) zwischen nebeneinanderliegenden einzelnen Zellen der Vielzahl von einzelnen Zellen angeordnet ist, wobei der Abstandshalter (40) eine Platte aufweist, die unebene Vorder- und Rückflächen aufweist; und

eine Öffnung des Elektrolytabschnitts (21) durch die Fenster (13, 14, 15) des Gehäuses (10) zu der Außenatmosphäre hin offen ist, wobei die Trenneinrichtung (32) mit dem wasserabsorbierenden Material (50), das in dem Elektrolytabschnitt (21) vorhanden ist, in Kontakt ist.

2. Eine Luftzelle nach Anspruch 1, wobei ein Stromabnehmer (33) zwischen der Anode (31) und der Trenneinrichtung (32) vorgesehen ist.

3. Eine Luftzelle nach Anspruch 1 oder 2, wobei der Elektrolytabschnitt (21) eine Teilungseinrichtung (23, 25a, 26a, 27a) hat.

4. Eine Luftzelle nach Anspruch 3, wobei der Elektrolytabschnitt in eine Vielzahl von Abschnitten (21a, 22a, 23a, 24a) unterteilt ist, die derartig angeordnet sind, daß eine einzelne Zelle einem der eingeteilten Abschnitte entspricht, und daß einzelne Zellen, von denen jede eine Zuführung eines Elektrolyten von einem unterschiedlichen Abschnitt hat, in Reihe miteinander geschaltet sind.

5. Eine Luftzelle nach Anspruch 3, wobei der Elektrolytabschnitt in eine Vielzahl von Abschnitte (21, 22) unterteilt ist, die derartig angeordnet sind, daß zwei oder mehr einzelne Zellen einem der eingeteilten Abschnitte entsprechen und einzelne Zellen, die eine Zuführung eines Elektrolyten von einem gemeinsamen Abschnitt haben, parallel zueinander geschaltet sind.

6. Eine Luftzelle nach Anspruch 3, wobei der Elektrolytabschnitt in eine Vielzahl von Abschnitten (21a, 22a, 23a, 24a) unterteilt ist, wobei einzelne Zellen, von denen jede eine Zuführung eines Elektrolyten von einem unterschiedlichen Abschnitt hat, in Reihe miteinander geschaltet sind, und einzelne Zellen, die eine Zuführung eines Elektrolyten von einem gemeinsamen Abschnitt haben, parallel zueinander geschaltet sind.

7. Eine Luftzelle nach einem der vorangegangenen Ansprüchen, wobei eine konvexe Oberfläche einer Fläche des Abstandshalters (40) eine entsprechende konkave Oberfläche an der entgegengesetzten Fläche hat.

8. Eine Luftzelle nach Anspruch 1, wobei wasserabsorbierende Materialien in den jeweiligen eingeteilten Elektrolytabschnitten (21) nicht in einem Zustand des Kontakts miteinander sind.

9. Eine Luftzelle nach Anspruch 1, wobei das wasserabsorbierende Material (50) und/oder die Trenneinrichtung (22) ein Element oder eine Mischung von zwei oder mehr Elementen aus der Gruppe aufweisen, die aus Zellstoff, synthetischen Fasern, natürlichen Fasern, Asbest und Glaspapier besteht.

**Revendications**

1. Cellule à air comprenant :

un boîtier (10) ;

une pluralité de mono-cellules (30) qui sont placées dans ledit boîtier (10), chacune desdites mono-cellules comportant une cathode (34), une anode (31) et un séparateur (32) intercalés entre, et intégrant ladite cathode (34) et ladite anode (31) ; et

un compartiment à électrolyte (21) qui est prévu à la partie inférieure dudit boitier (10) et un matériau absorbant l'eau (50) susceptible d'absorber et de retenir un électrolyte placé dans ledit compartiment à électrolyte (21) ;

caractérisée en ce que

la cellule à air est sensiblement ouverte sur toutes ses surfaces, en comportant une pluralité de fenêtres (13, 14, 15) qui traversent le boîtier (10) pour la circulation d'air ;

un dispositif d'écartement (40) est intercalé entre des cellules adjacentes de ladite pluralité de mono-cellules, ledit dispositif d'écartement (40) étant constitué par une plaque présentant des surfaces avant et arrière irrégulières ; et

une ouverture dans ledit compartiment à électrolyte (21) étant ouverte vers l'atmosphère extérieure à travers lesdites fenêtres (13, 14, 15) dudit boîtier (10), ledit dispositif d'écartement (32) étant en contact avec ledit matériau absorbant l'eau (50) qui occupe ledit compartiment à électrolyte (21).

2. Cellule à air selon la revendication 1, dans laquelle un collecteur de courant (33) est installé entre ladite anode (31) et ledit séparateur (32).

3. Cellule à air selon la revendication 1 ou 2, dans laquelle ledit compartiment à électrolyte (21) comprend une séparation (23, 25a, 26a, 27a).

4. Cellule à air selon la revendication 3, dans laquelle ledit compartiment à électrolyte est divisé en une pluralité de compartiments (21a, 22a, 23a, 24a) qui sont agencés de manière qu'une seule mono-cellule corresponde à l'un des compartiments séparés, et que les mono-cellules, dont chacune est alimentée en électrolyte à partir d'un compartiment différent, soient connectées en série entre elles.

5. Cellule à air selon la revendication 3, dans laquelle ledit compartiment à électrolyte est divisé en une pluralité de compartiments (21, 22) qui sont agencés de manière que deux ou plusieurs mono-cellules correspondent à un seul des compartiments séparés, et que des mono-cellules qui sont alimentées en électrolyte à partir d'un compartiment commun soient connectées en parallèle entre elles.

6. Cellule à air selon la revendication 3, dans laquelle ledit compartiment à électrolyte est divisé en une pluralité de compartiments (21a, 22a, 23a, 24a), les mono-cellules, dont chacune est alimentée en électrolyte à partir à un compartiment différent, sont connectées en série entre elles, et les mono-cellules, qui sont alimentées en électrolyte à partir d'un compartiment commun, sont connectées en parallèle entre elles.

7. Cellule à air selon l'une quelconque des revendications précédentes, dans laquelle une surface convexe sur une face du dispositif d'écartement (40) correspond à une surface concave de la face opposée.

8. Cellule à air selon la revendication 1, dans laquelle des matériaux hydrophiles placés dans les compartiments à électrolyte respectif séparés (21) ne sont pas en contact entre eux.

9. Cellule à air selon la revendication 1, dans laquelle ledit matériau absorbant l'eau (50) et/ou le séparateur (22) sont constitués d'un seul ou d'un mélange de deux ou plusieurs produits choisis dans le groupe comprenant : des pulpes, des fibres synthétiques, des fibres naturelles, de l'amiante et des papiers de verre.

FIG. 1

FIG. 2

FIG.3

FIG. 4

FIG.5A

FIG. 5B

FIG.6A     FIG.6B

FIG. 7

FIG. 8

FIG. 9

FIG. 10

DISCHARGE TEST IN VARIOUS
KCl CONCENTRATION
( 1000 mA. 21°C )

FIG. II